# EUROPEAN PATENT APPLICATION

(11) **EP 0 539 883 A2**
(43) Date of publication of application: **05.05.1993**
(21) Application number: 92118183.0
(22) Date of filing: 23.10.1992
(51) Int. Cl.: F16D 41/12

(54) **Protection device particularly for gearboxes in machines**

(30) Priority: 30.10.1991 IT MI910944 U
(71) Applicant: COMER S.p.A., I-42046 Villanova di Reggiolo, (Province of Reggio Emilia) (IT)
(72) Inventor: Brunazzi, Achille, I-42040 Santa Vittoria (IT)
(74) Representative: Modiano, Guido, Dr.-Ing.

(57) **Abstract**

Protection device particularly for gearboxes in power-using machines in general comprising a transmission shaft (1) and a tubular body (2) within which the transmission shaft (1) can be accommodated; the transmission shaft (1) comprises, on its outer surface, accommodation seats (3) for means for reversible coupling (5,6) with other accommodation seats (4) defined on an internal surface of the tubular body (2). The reversible coupling means (5,6) selectively rotationally couple and uncouple the shaft (1) and the tubular body (2).

## Description

The present invention relates to a protection device particularly for gearboxes in power-using machines in general.

Power-using machines are used in agriculture and are towed by tractors which transmit the power by means of appropriate couplings and appropriate gearboxes.

The biggest problem which arises in these power-using machines is due to the transmission of negative torque stresses, i.e. stresses opposite to the operation of said power-using machine, towards the gearbox and thus towards the entire power transmission arriving from the tractor.

This problem arises mostly in power-using machines equipped with heavy flywheels which turn at high rates and thus have a high inertia and which, when the towing tractor decelerates, tend to transmit said negative torque stresses toward the power take-off of the tractor.

The aim of the present invention is to eliminate or substantially reduce the problems described above by providing a protection device particularly for gearboxes in power-using machines in general which eliminates the transmission of negative torque stresses on the part of the power-using machine toward the towing tractor.

Another object of the present invention is to provide a protection device which can be applied on conventional gearboxes.

Not least object of the present invention is to provide a protection device which is highly reliable, relatively easy to manufacture and at competitive costs.

This aim, the objects mentioned and others which will become apparent hereinafter are achieved by a protection device particularly for gearboxes in power-using machines in general, comprising a transmission shaft and a tubular body within which said transmission shaft can be accommodated, characterized in that said transmission shaft comprises, on its surface, accommodation seats for means for reversible coupling with accommodation seats defined on an internal surface of said tubular body, said reversible coupling means being able to selectively rotationally rigidly couple and uncouple said shaft and said tubular body.

Further characteristics and advantages of the invention will become apparent from the description of a protection device particularly for gearboxes in power-using machines in general, illustrated only by way of non-limitative example in the accompanying drawings, wherein:
figure 1 is an exploded perspective view of a device according to the invention;
figure 2 is a sectional view of the coupling between a transmission shaft and a tubular body; and
figure 3 is an exploded perspective view of a practical embodiment of the device according to the invention.

With reference to the above figures, a protection device particularly for gearboxes in power-using machines in general comprises a transmission shaft 1 and a tubular body 2 within which the transmission shaft 1 can be accommodated.

The transmission shaft 1 has, on its surface, accommodation seats for means for reversible coupling to accommodation seats defined on an inner surface of the tubular body 2. The reversible coupling means selectively rotationally couple and uncouple the shaft 1 and the tubular body 2.

The accommodation seats provided on the shaft 1 can comprise one or more grooves 3 defined longitudinally parallel to the axis of the shaft 1 in order to accommodate the reversible coupling means.

The accommodation seats comprise one or more guides 4 defined like the grooves 3 on the inner surface of the tubular body 2 in order to accommodate the reversible coupling means.

The reversible coupling means comprise keys 5 and counteracting elastic means. Each key 5 can be inserted within one of the grooves 3 together with the counteracting elastic means, which can rotate the respective key 5 so as to insert a portion thereof within one of the guides 4.

The counteracting elastic means are composed of at least one curved lamina 6 which can be coupled to a respective key 5.

Each guide 4 has a transverse cross-section which is substantially complementary to the transverse cross-section of the portion of the key 5 which accommodates in it.

Each groove 3 is parallelepipedal in shape, in order to accommodate a key 5 with the respective lamina 6.

Without the interposition of the keys 5 and of the laminae 6, the shaft 1 can rotate freely within the tubular body 2. The insertion of the keys 5, each with its respective lamina 6, within the grooves 3, and the insertion of the shaft 1 within the tubular body 2 cause the following effects:
advantageously, the keys 5, when the rotation of the tubular body 2 moves the guides 4 into a position which corresponds to the grooves 3, are pushed into the guides 4 by the laminae 6, rigidly coupling the shaft 1 to the tubular body 2;
conveniently, if the rotation rate applied to the tubular body 2 decreases and the shaft 1 transmits motion to a power-using machine which has flywheels with great inertia, then the shaft 1 maintains the rotation rate imparted prior to deceleration, then the keys 5 are uncoupled from the guides 4 and, by compressing the laminae 6, return into the groove 3, allowing the shaft 1 to rotate freely with respect to the tubular body 2.

In practical applications, the rotation of the shaft 1 with respect to the tubular body 2 is slowed down due to the friction both of the flywheels and also of the rotating parts. In any case, when an equal rotation rate is reached by the tubular body 2 and the shaft 3, the keys 5 re-enter the guides 4 and restore traction.

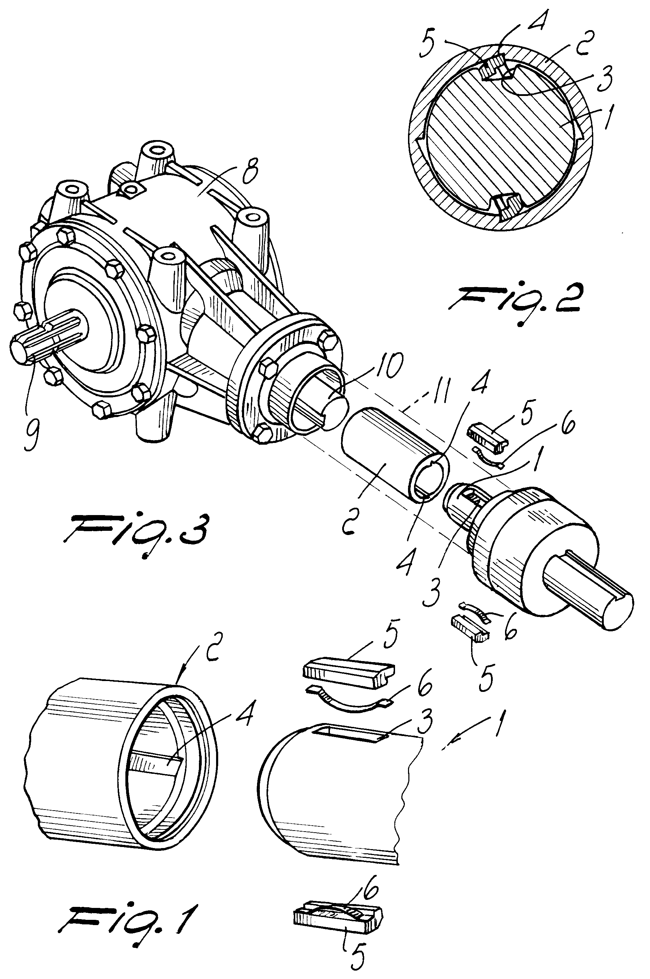

Figure 3 illustrates a possible practical application: it is possible to fix to a gearbox 8, which has a power input shaft 9 and an output shaft 10, an extension 11 inside which the tubular body 2 is accommodated; said tubular body is fixed to the output shaft 10 and is connected to the shaft 1. The covering of the tubular body 2 and of the shaft 1 by means of the extension 11 advantageously allows to lubricate with oil, which arrives for example from the gearbox 8, the device according to the invention, thus limiting wear and heating.

Practical tests have shown that the device according to the invention achieves the intended aim and objects, constituting a simple and relatively low-cost solution to the problem of eliminating negative torque stresses which can, in the currently known situations, cause the breakage of the gearbox 8.

In practice, the type of the free-wheel device does not limit the invention, so long as its dimensions allow placement thereof inside the extension 11, which for certain applications is an integral part of the gearbox 8.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Protection device particularly for gearboxes in power-using machines in general, comprising a transmission shaft (1) and a tubular body (2) within which said transmission shaft (1) can be accommodated, characterized in that said transmission shaft (1) comprises, on its surface, accommodation seats (3) for means for reversible coupling (5,6) with accommodation seats (4) defined on an internal surface of said tubular body (2), said reversible coupling means (5,6) being able to selectively rotationally couple and uncouple said shaft (1) and said tubular body (2).

2. Protection device according to claim 1, characterized in that said accommodation seats of said transmission shaft (1) comprise at least one groove (3) which is defined longitudinally on said shaft (1) and is able to accommodate said reversible coupling means (5,6).

3. Protection device according to the preceding claims, characterized in that said accommodation seats of said tubular body (2), comprise at least one guide (4) which is defined longitudinally on said inner surface of said tubular body (2) and is able to accommodate said reversible coupling means (5,6).

4. Protection device according to one or more of the preceding claims, characterized in that said reversible coupling means comprise keys (5) and counteracting elastic means (6), each key being insertable within one of said grooves (3) together with said counteracting elastic means (6), said elastic means (6) being able to rotate said key (5) to insert a portion thereof within one of said guides (4).

5. Protection device according to one or more of the preceding claims, characterized in that said counteracting elastic means are composed of at least one curved lamina (6) which can be coupled to a respective key (5).

6. Protection device according to one or more of the preceding claims, characterized in that each guide (4) comprises a transverse cross-section which is substantially complementary to the key portion which enters it.

7. Protection device according to one or more of the preceding claims, characterized in that each groove (3) is parallelepipedal in shape.
